Europäisches Patentamt

European Patent Office

Office européen des brevets

(19)

(11) Publication number:

**0 305 012**
**A2**

## (12) EUROPEAN PATENT APPLICATION

(21) Application number: 88201803.9

(22) Date of filing: 24.08.88

(51) Int. Cl.⁴: **C08G 67/02** , **C07F 9/50** ,
**B01J 31/18**

(30) Priority: 27.08.87 NL 8702003

(43) Date of publication of application:
**01.03.89 Bulletin 89/09**

(84) Designated Contracting States:
**BE CH DE FR GB IT LI NL**

(71) Applicant: **SHELL INTERNATIONALE**
**RESEARCH MAATSCHAPPIJ B.V.**
**Carel van Bylandtlaan 30**
**NL-2596 HR Den Haag(NL)**

(72) Inventor: **Van Doorn, Johannes Adrianus**
**Badhuisweg 3**
**NL-1031 CM Amsterdam(NL)**
Inventor: **Budzelaar, Petrus Henricus Maria**
**Badhuisweg 3**
**NL-1031 CM Amsterdam(NL)**
Inventor: **Wife, Richard Lewin**
**Badhuisweg 3**
**NL-1031 CM Amsterdam(NL)**

(74) Representative: **Aalbers, Onno et al**
**P.O. Box 302**
**NL-2501 CH The Hague(NL)**

(54) **Catalytic compositions for the polymerization of carbon monoxide with an olefin.**

(57) Catalytic compositions comprising
(a) a palladium compound,
(b) an anion of an acid having a pKa of less than 6, and
(c) a diphosphine of the general formula $R_9R_{10}P\text{-}R\text{-}PR_{11}R_{12}$, wherein $R_9$ to $R_{12}$ stand for carbocyclic hydrocarbyl groups or heteroaromatic substituents and R represents a bridging group containing at least one carbon atom in the bridge, with the proviso that at least one of $R_9$ to $R_{12}$ is a heteroaromatic substituent. The heteroaromatic substituent should contain one or more O, S and/or N-atoms in a five or six-membered ring, which ring is bound to the P-atom by a carbon ring-atom.
The catalysts are active in the preparation of linear alternating polyketones.

EP 0 305 012 A2

# CATALYTIC COMPOSITIONS FOR THE POLYMERIZATION OF CARBON MONOXIDE WITH AN OLEFIN

The invention relates to novel compositions which are suitable for use as catalysts in the preparation of polymers of carbon monoxide with one or more olefinically unsaturated compounds, to a polymerization process using these catalytic compositions, and to the polymers thus prepared. Furthermore, the invention relates to certain novel intermediates useful for the preparation of these compositions.

High molecular weight linear polymers of carbon monoxide with one or more olefinically unsaturated compounds (for the sake of brevity referred to as olefins or as (A), in which the monomer units are present in alternating order and which thus consist of units of the general formula $-(CO)-A'-$, wherein $A'$ represents a monomer unit derived from a monomer A used, are conveniently prepared by using a catalytic composition based upon

    a) a palladium compound,

    b) an anion of an acid having a pKa of less than 6, and

    c) a monophosphine of the general formula $R_1R_2R_3P$ or a diphosphine of the general formula $R_1R_2P-R-PR_3R_4$, in which $R_1$, $R_2$, $R_3$ and $R_4$ independently represent the same or different optionally polar-substituted carbocyclic hydrocarbyl groups and wherein R represents a bivalent bridging group containing at least one carbon atom in the bridge.

Recently it was found that if in the monophosphine mentioned under c) at least one of the hydrocarbyl groups $R_1$, $R_2$ and $R_3$ is replaced by a heteroaromatic substituent $R_5$, $R_6$ or $R_7$ containing one or more oxygen, sulphur and/or nitrogen atoms in a five or six-membered ring, which ring is bound to the phosphorus atom by a carbon ring-atom, one obtains catalytic compositions having appreciable activities for the polymerization of carbon monoxide with one or more olefinically unsaturated compounds. In some cases their activity is even considerably superior to the activity of the corresponding catalytic composition based on the hydrocarbyl-substituted monophosphine. Examples of suitable heteroaromatic-substituted monophosphines which may be regarded as being derived from triphenyl phosphine by substitution of one or two of the phenyl groups with a nitrogen-containing heteroaromatic substituent, are: 2-(diphenyl-phosphino)pyridine, 2-(diphenyl-phosphino)-1-methyl pyrrole, 2-(diphenyl-phosphino)-1,3,5-triazine and bis(2-pyridyl)phenyl phosphine.

It has now been found that if at least one of the hydrocarbyl groups $R_1$, $R_2$, $R_3$, $R_4$ in the diphosphines is replaced by a heteroaromatic sub-stituent $R_5$, $R_6$, $R_7$, $R_8$, this leads to a catalytic composition having an appreciable activity for the above-mentioned polymerization. Such compositions are novel.

The present patent application therefore relates to catalytic compositions based upon

    a) a palladium compound,

    b) an anion of an acid having a pKa of less than 6, and

    c) a diphosphine of the general formula $R_9R_{10}P-R-PR_{11}R_{12}$, wherein $R_9$, $R_{10}$, $R_{11}$ and $R_{12}$ independently represent the same or different, optionally polar-substituted, carbocyclic hydrocarbyl groups or the same or different heteroaromatic substituents containing one or more oxygen, sulphur and/or nitrogen atoms in a five or six-membered ring, which ring is bound to the phosphorus atom by a carbon ring-atom, with the proviso that at least one of the substituents $R_9$, $R_{10}$, $R_{11}$, $R_{12}$ in the diphosphine is a heteroaromatic substituent, and wherein R represents a bivalent bridging group containing at least one carbon atom in the bridge.

The palladium compound used in the catalytic compositions as component a) is preferably a palladium salt of a carboxylic acid and in particular palladium acetate. The preferred component b) in the catalytic compositions is an anion of an acid having a pKa of less than 4 (determined in aqueous solution at 18 °C) and in particular an anion of an acid having a pKa of less than 2. More specifically, preference is given to an anion of a sulphonic acid, such as para-toluene-sulphonic acid or to an anion of a carboxylic acid, such as trifluoroacetic acid. In the catalytic compositions, component b) is preferably present in a quantity of from 0.5 to 200 and in particular of from 1.0 to 100 equivalents per mol palladium. Component b) may be taken up in the catalytic compositions in acid and/or in salt form. Eligible salts include non-noble transition metal salts and in particular copper salts. If desired, components a) and b) may be used combined in a single compound. An example of such a compound is the complex $Pd(CH_3CN)_2(O_3S-C_6H_4-CH_3)_2$ which can be prepared by reacting, in acetonitrile, either palladium chloride and silver para-tosylate, or palladium acetate and para-toluenesulphonic acid.

In the catalytic compositions, component c) is preferably present in a quantity of 0.1-2 and in particular of 0.75-1.5 mol per mol of palladium compound.

In the diphosphines used as components c), at least one of the groups $R_9$, $R_{10}$, $R_{11}$ and $R_{12}$ should be a heteroaromatic substituent having the structure as defined hereinbefore for $R_5$, $R_6$ and

$R_7$. Preference is given to heteroaromatic substituents containing only one hetero atom in the ring. In addition to the nitrogen-containing heteroaromatic substituents named hereinbefore, the 4-pyridyl group, the 2-furyl group and the 2-thienyl group may be mentioned. It is preferred to use as components c) diphosphines in which the heteroaromatic substituents are 2-pyridyl or 2-furyl groups. If in the diphosphines used as components c) one or more of the groups $R_9$, $R_{10}$, $R_{11}$ and $R_{12}$ are carbocyclic hydrocarbyl groups, these are preferably optionally polar-substituted phenyl groups. As polar substituents that may be present in the carbocyclic hydrocarbyl groups may be mentioned, inter alia, dialkylamino groups, such as dimethylamino groups, and alkoxy groups, such as methoxy or tert.butoxy groups. Examples of polar-substituted carbocyclic hydrocarbyl groups which may be present in the diphosphines are the 2-methoxyphenyl and the 2,4-dimethoxyphenyl groups.

In the diphosphines of the general formula $R_9R_{10}P-R-PR_{11}R_{12}$ used in the catalytic compositions as components c), R represents a bivalent bridging group containing at least one carbon atom in the bridge. Preferably, bridging group R contains three atoms in the bridge at least two of which are carbon atoms. Examples of suitable bridging groups R are the $-CH_2-CH_2-CH_2-$ group, the $-CH_2-C(CH_3)_2-CH_2-$ group, the $-CH_2-Si(CH_3)_2-CH_2-$ group and the $-CH_2-O-CH_2-$ group.

Components c) that are used with preference in the catalytic compositions of the invention, are either diphosphines represented by the general formula $(R_{13})_2P-R-P(R_{13})_2$, wherein $R_{13}$ stands for a heteroaromatic substituent having a structure as defined hereinbefore for $R_5$, $R_6$ and $R_7$, or diphosphines represented by the general formula $R_{13}R_{14}P-R-PR_{13}R_{14}$, wherein $R_{14}$ stands for an optionally polar-substituted carbocyclic hydrocarbyl group.

According to another aspect of the invention, diphosphines of the general formula $(R_{13})_2P-R-P-(R_{13})_2$ are prepared by the reaction in liquid ammonia of an alkali metal M with a monophosphine of the general formula $(R_{13})_3P$, followed by the reaction of the alkali metal phosphide $(R_{13})_2PM$ thus obtained with a compound of the general formula $X-R-X$, in which X represents chlorine or bromine.

Diphosphines of the general formula $R_{13}R_{14}P-R-PR_{13}R_{14}$ are novel compounds. They can be prepared for instance by the reaction of a halogen monophosphine of the general formula $R_{13}R_{14}PX$ with an alkali metal M, followed by the reaction of the alkali metal phosphide $R_{13}R_{14}PM$ thus obtained with a compound of the general formula X-R-X, in which general formulae X represents chlorine or bromine. The halogen phosphine $R_{13}R_{14}PX$

may suitably be obtained from a three-step synthesis: first reacting $R_{13}X$ with e.g. n-butyllithium to obtain $LiR_{13}$; coupling with zinc halide $ZnX_2$ to $R_{13}ZnX$; and finally reacting with $R_{14}PX_2$ to yield the desired starting material $R_{13}R_{14}PX$.

The present patent application also relates to heteroaromatic-substituted diphosphines of the general formula $R_{13}R_{14}P-R-PR_{13}R_{14}$ as novel compounds and to the preparation of these novel compounds in the manner described hereinbefore.

In order to enhance the activities of the present catalytic compositions, it is advantageous to incorporate a 1,4-quinone as a component d). In addition to optionally alkyl-substituted 1,4-benzoquinones, there are other eligible 1,4-quinones, such as optionally alkyl-substituted 1,4-naphthoquinones. It is preferred to use 1,4-benzoquinone and 1,4-naphthoquinone as promoters. The quantity of 1,4-quinone used preferably amounts to 10-1000 mol and in particular 25-250 mol per mol Pd.

The polymerization by using the catalytic compositions according to the invention is preferably carried out in a pressure vessel, by contacting the monomers with the catalytic composition dissolved in a fluid in which the polymers are not or hardly soluble. During the polymerization process the polymers are obtained in the form of a suspension in the diluent. Generally, the polymerization is terminated by cooling and releasing the pressure after the required degree of polymerization is reached. The polymers can be isolated from the suspension, for instance by filtration or centrifugation. Diluents that have been found very suitable are lower alcohols, such as methanol and ethanol.

Suitable olefinically unsaturated compounds that can be polymerized with carbon monoxide by using the catalytic compositions according to the invention are both compounds consisting exclusively of carbon and hydrogen and compounds which, in addition to carbon and hydrogen, contain one or more hetero-atoms. The catalytic compositions according to the invention are preferably used for preparing polymers of carbon monoxide with one or more olefinically unsaturated hydrocarbons. Examples of suitable hydrocarbon monomers are ethene and other alpha-olefins, such as propene, butene-1, hexene-1 and octene-1, as well as styrene and alkyl-substituted styrenes, such as p-methylstyrene and p-ethylstyrene. The catalytic compositions according to the invention are especially suited to be used for the preparation of copolymers of carbon monoxide and ethene and for the preparation of terpolymers of carbon monoxide with ethene and another olefinically unsaturated hydrocarbon, in particular propene.

The quantity of catalytic composition used in the preparation of the polymers may vary within wide ranges. Per mol of olefinic compound to be polymerized, such a quantity of catalyst is preferably used as to contain $10^{-7}$-$10^{-3}$, and in particular $10^{-6}$-$10^{-4}$, mol of palladium.

The preparation of the polymers is preferably carried out at a temperature of 20-200 °C and a pressure of 1-200 bar and in particular at a temperature of 30-150 °C and a pressure of 20-100 bar. In the reaction mixture, the molar ratio of olefins to carbon monoxide is preferably 10:1-1:5 and in particular 5:1-1:2.

The invention is now illustrated with the aid of the following examples.

Example 1

2,2-Dimethyl-1,3-bis[di(2-furyl)phosphino]-propane was prepared as follows. To 500 ml of liquid ammonia present in a stirred reaction vessel which was kept at -78 °C were consecutively added 41 mmol of sodium and 20 mmol of tri(2-furyl)-phosphine. After 4 hours, 18 mmol of ammonium chloride was added to the reaction mixture and subsequently, after 15 minutes, 8.7 mmol of 1,3-dibromo-2,2-dimethylpropane. After the addition of 100 ml of tetrahydrofuran, ammonia was removed by evaporation and the residue was refluxed for 2 hours. After the solvent was removed in vacuo, dichloro methane and an aqueous solution of ammonium chloride were added to the residue. The organic layer was separated off, dried and filtered. Finally, the solvent was removed. From analysis of the residue it appeared that the 2,2-dimethyl-1,3-bis[di(2-furyl)phosphino]-propane had been obtained in a yield of 70%, calculated on the quantity of 1,3-dibromo-2,2-dimethylpropane employed.

Example 2

Bis[(2-pyridyl)phenyl-phosphino]methane was prepared as follows:

(a) Preparation of phenyl(2-pyridyl)-chlorophosphine:
So-called anhydrous zinc chloride (47 g; 0.35 mol) was molten in vacuo, cooled to room temperature and dissolved in 100 ml diethyl ether. To 200 ml diethyl ether in a 3-necked round-bottom flask was added 216 ml (0.35 mol) of a 1.6 M n-butyllithium solution in hexane, and the mixture was cooled to -40 °C. From a dropping funnel, a mixture of 33 ml 2-bromopyridine (54.6 g, 0.35 mol) and 50 ml ether was slowly added to the stirred mixture, which was kept below -20 °C. When all bromopyridine had been added, the temperature was allowed to slowly rise to -5 °C. The solution of 2-lithiopyridine was kept at that temperature for 5 min and then cooled to -35 °C. The solution of zinc chloride was added from the dropping funnel, keeping the temperature below -20 °C. Then the cooling bath was removed and 200 ml of tetrahydrofuran (THF) and 100 ml of pyridine were added. An oil, consisting mainly of [2-PyZnCl.Py]₂, was formed, which solidified on standing overnight.
The next day, the solid crust was detached from the walls of the vessel and converted into a fine powder by thorough mechanical stirring. The solvent was decanted, and the solid was washed twice with diethyl ether. THF (300 ml) and pyridine (100 ml) were added. In a second 3-necked flask, 53 ml (69.9 g, 0.39 mol) phenyldichlorophosphine was mixed with 100 ml of pyridine, and the mixture was cooled in an ice-salt bath. In the course of 30 min, the suspension of PyZnCl in THF/pyridine was added in portions to the PhPCl₂ solution. After the addition, the reaction mixture was heated to 60 °C for 30 min. The solvents were removed in vacuo, and the residue was extracted with hexane. The hexane was evaporated, and the residue was distilled in vacuo, giving 38 g of phenyl(2-pyridyl)-chlorophosphine (b.p. 142 °C/1 torr), overall yield 50%.

(b) To 68 mmol of (2-pyridyl)phenyl-chlorophosphine dissolved in 120 ml of tetrahydrofuran were added 140 mmol of sodium and 20 mg of 4,4'-di(tert.butyl)-biphenyl. The mixture was refluxed for several days until the colour had changed to dark red and then boiled for another 24 hours. After the reaction mixture was cooled down to -78 °C, a solution of 34 mmol of dichloromethane in 25 ml of tetrahydrofuran was added over 30 minutes. After having been kept at -78 °C for another 30 minutes, the reaction mixture was slowly warmed up to room temperature. After the removal in vacuo of the solvent, 75 ml of a diluted sodium hydroxide solution was added to the residue. The mixture was extracted with dichloromethane and the solvent was removed in vacuo. The pure bis[(2-pyridyl)phenyl-phosphino]-methane was isolated from the residue by chromatographic means.

Example 3

1,2-Bis[(2-pyridyl)phenyl-phosphino]ethane was prepared substantially in the same way as the bis[(2-pyridyl)phenyl-phosphino]methane of Example 2, except that instead of dichloromethane, 1,2-dichloroethane was employed.

## Example 4

1,3-Bis[(2-pyridyl)phenyl-phosphino]propane was prepared substantially in the same way as the bis[(2-pyridyl)phenyl-phosphino]methane of Example 2, except that instead of dichloromethane, 1,3-dichloropropane was employed.

## Example 5

1,5-Bis[(2-pyridyl)phenyl-phosphino]-3-oxapentane was prepared substantially in the same way as the bis[(2-pyridyl)phenyl-phosphino]-methane of Example 2, except that instead of dichloromethane, 1,5-dichloro-3-oxapentane was employed.

## Example 6

1,8-Bis[(2-pyridyl)phenyl-phosphino]-3,6-dioxaoctane was prepared substantially in the same way as the bis[(2-pyridyl)phenyl-phosphino]-methane of Example 2, except that instead of dichloromethane, 1,8-dichloro-3,6-dioxaoctane was employed.

## Example 7

A carbon monoxide/ethene copolymer was prepared as follows. A mechanically stirred autoclave of 300 ml capacity was charged with 250 ml of methanol. After the contents of the autoclave had been brought to a temperature of 83 $^\circ$C, a 1:1 carbon monoxide/ethene mixture was introduced until a pressure of 55 bar was reached. A catalyst solution was then introduced into the autoclave, consisting of:
5.5 ml of methanol,
0.017 mmol of palladium acetate,
0.034 mmol of para-toluenesulphonic acid and
0.024 mmol 2,2-dimethyl-1,3-bis[di(2-furyl)-phosphino]-propane, and
1.9 mmol of 1,4-benzoquinone.

During polymerization, the pressure was maintained at 55 bar by introducing under pressure a 1:1 carbon monoxide/ethene mixture. After 2.7 hours the polymerization was terminated by cooling the reaction mixture down to room temperature and releasing the pressure. The copolymer was filtered off, washed with methanol and dried at 50 $^\circ$C.

13.6 g of copolymer was obtained. The polymerization rate was 2800 g copolymer/g palladium/hour.

## Example 8

A carbon monoxide/ethene copolymer was prepared substantially in the same way as the copolymer of Example 7, except for the following differences
a) the polymerization temperature was 82 $^\circ$C instead of 83 $^\circ$C,
b) the catalyst solution used contained 1,3-bis[(2-pyridyl)phenyl-phosphino]propane instead of 2,2-dimethyl-1,3-bis[di(2-furyl)-phosphino]propane, and
c) the polymerization time was 18 hours instead of 2.7 hours.

2.0 g of copolymer was obtained. The polymerization rate was 70 g copolymer/g palladium/hour.

## Example 9

A carbon monoxide/ethene copolymer was prepared substantially in the same way as the copolymer of Example 7, except for the following differences
a) the polymerization temperature was 82 $^\circ$C instead of 83 $^\circ$C,
b) the catalyst solution used contained
5.5 ml of methanol,
0.02 mmol of palladium acetate,
0.04 mmol of copper para-tosylate,
0.027 mmol of 1,3-bis[(2-pyridyl)phenyl-phosphino]propane, and
6.5 mmol of 1,4-benzoquinone, and
c) the polymerization time was 3.1 hours instead of 2.7 hours.

1.04 g of copolymer was obtained. The polymerization rate was 160 g copolymer/g palladium/hour.

With the aid of $^{13}$C-NMR analysis it was established that the carbon monoxide/ethene copolymers prepared according to Examples 7-9 had a linear alternating structure and therefore consisted of units of the formula -(CO)-CH$_2$-CH$_2$-.

## Claims

1. Catalytic compositions, based upon
a) a palladium compound,
b) an anion of an acid having a pKa of less than 6, and
c) a diphosphine of the general formula $R_9R_{10}P-R-PR_{11}R_{12}$, wherein $R_9$, $R_{10}$, $R_{11}$ and $R_{12}$ independently represent the same or different, optionally polar-substituted, carbocyclic hydrocarbyl groups or the same or different heteroaromatic substituents containing one or more oxygen, sulphur and/or nitrogen atoms in a five or six-membered ring, which ring is bound to the phosphorus atom by a carbon ring-atom, with the proviso that at least one of the substituents $R_9$, $R_{10}$, $R_{11}$, $R_{12}$ in the diphosphine is a heteroaromatic substituent, and wherein R represents a bivalent bridging group containing at least one carbon atom in the bridge.

2. Catalytic compositions as claimed in claim 1, characterized in comprising a palladium salt of a carboxylic acid as component a) and an anion of an acid having a pKa of less than 2 as component b).

3. Catalytic compositions as claimed in claim 1 or 2, characterized in comprising an anion of a sulphonic or a carboxylic acid as component b) which is present in the catalytic compositions in a quantity of 1.0 to 100 equivalents per mol palladium.

4. Catalytic compositions as claimed in one or more of claims 1-3, characterized in that component b) is incorporated therein in the form of an acid or in the form of a non-noble transition metal salt.

5. Catalytic compositions as claimed in one or more of claims 1-4, characterized in that component c) is present therein in a quantity of 0.75-1.5 mol per mol of palladium compound.

6. Catalytic compositions as claimed in one or more of claims 1-5, characterized in that the heteroaromatic substituent(s) which is or are present in the diphosphine used as component c), is or are a 2-pyridyl or a 2-furyl group.

7. Catalytic compositions as claimed in one or more of claims 1-6, characterized in that if one of $R_9$, $R_{10}$, $R_{11}$ or $R_{12}$ represents an optionally polar-substituted carbocyclic hydrocarbyl group, it is selected from optionally polar-substituted phenyl groups, such as the phenyl group, the 2-methoxy-phenyl group or the 2,4-dimethoxy-phenyl group.

8. Catalytic compositions as claimed in one or more of claims 1-7, characterized in that, as component c), they contain a diphosphine of the general formula $(R_{13})_2$P-R-P$(R_{13})_2$ or a diphosphine of the general formula $R_{13}R_{14}$P-R-P$R_{13}R_{14}$, wherein $R_{13}$ represents a heteroaromatic substituent having a structure as defined in claim 1 and $R_{14}$ represents an optionally polar-substituted carbocyclic hydrocarbyl group.

9. Catalytic compositions as claimed in one or more of claims 1-8, characterized in that the bridging group present in component c) contains three atoms in the bridge at least two of which are carbon atoms.

10. Catalytic compositions as claimed in one or more of claims 1-9, characterized in that in addition they contain a 1,4-quinone as component d).

11. Process for the preparation of polymers, characterized in that a mixture of carbon monoxide with one or more olefinically unsaturated compounds is polymerized by contacting the mixture with a catalytic composition as claimed in one or more of claims 1-10.

12. Process as claimed in claim 11, characterized in that it is carried out at a temperature of 30-150 °C, at a pressure of 20-100 bar and at a molar ratio of olefins to carbon monoxide of 5:1-1:2, and in that per mol of olefinic compound to be polymerized, such a quantity of catalytic composition is used as to contain $10^{-6}$-$10^{-4}$ mol palladium.

13. Process for the preparation of diphosphines, characterized in that diphosphines of the general formula $(R_{13})_2$P-R-P$(R_{13})_2$ are prepared by the reaction in liquid ammonia of an alkali metal M with a monophosphine of the general formula $(R_{13})_3$P, followed by the reaction of the alkali metal phosphide $(R_{13})_2$PM thus obtained with a compound of the general formula X-R-X, in which X represents chlorine or bromine, R is a bivalent bridging group as defined in claim 1 and $R_{13}$ represents a heteroaromatic substituent having a structure as defined in claim 1.

14. Novel diphosphines of the general formula $R_{13}R_{14}$P-R-P$R_{13}R_{14}$, wherein $R_{14}$ represents a carbocyclic, optionally polar-substituted, hydrocarbyl group, R is a bivalent bridging group containing at least one carbon atom in the bridge and $R_{13}$ represents a heteroaromatic substituent, containing one or more oxygen, sulphur and/or nitrogen atoms in a five or six-membered ring, which ring is bound to the phosphorus atom by a carbon ring-atom.

15. As novel diphosphines as claimed in claim 14:
bis[(2-pyridyl)phenylphosphino]methane, 1,2-bis[(2-pyridyl)phenylphosphino]ethane, 1,3-bis[(2-pyridyl)-phenylphosphino]propane, 1,5-bis[(2-pyridyl)-phenylphosphino]-3-oxapentane, and 1,8-bis[(2-pyridyl)phenylphosphino]-3,6-dioxaoctane.

16. Process for the preparation of diphosphines as claimed in claims 14 and 15, characterized in that it is carried out by the reaction of a halogen monophosphine of the general formula $R_{13}R_{14}$PX with an alkali metal M, followed by the reaction of the alkali metal phosphide $R_{13}R_{14}$PM thus obtained with a compound of the general formula X-R-X, in which general formulae X represents chlorine or bromine.